# EUROPEAN PATENT SPECIFICATION

(11) **EP 3 532 507 B1**
(45) Date of publication and mention of the grant of the patent: **08.04.2020**
(21) Application number: 18700085.6
(22) Date of filing: 02.01.2018
(51) Int. Cl.: C08F 2/01, C08F 2/00, C08F 2/14, C08F 10/00

(54) **MULTI-REACTOR SLURRY POLYMERIZATION PROCESS**
MULTIREAKTORAUFSCHLÄMMUNGSPOLYMERISATIONSVERFAHREN
PROCÉDÉ DE POLYMÉRISATION EN SUSPENSION À RÉACTEURS MULTIPLES

(30) Priority: 03.01.2017 EP 17150083
(43) Date of publication of application: 04.09.2019
(73) Proprietor: Basell Polyolefine GmbH, 50389 Wesseling (DE)
(72) Inventor: ROHRBACH, Peter, 85055 Ingolstadt (DE); PERZLMEIER, Jürgen, 93333 Neustadt / Donau (DE)
(74) Representative: LyondellBasell
(86) International application number: PCT/EP2018/050016
(87) International publication number: WO 2018/127472

(56) References cited:
- EP-A1- 2 740 748
- WO-A1-2015/165861
- WO-A1-2016/023973

## Description

### FIELD OF THE INVENTION

The present disclosure relates to a process for ethylene polymerization. More particularly, the present disclosure relates to a multi-reactor slurry polymerization process furnishing increased amounts of on-spec product.

### BACKGROUND OF THE INVENTION

Multi-reactor cascade slurry polymerization processes are for example described in WO 2012/028591 A1, US 6,204,345 B1, and WO 2005/077992 A1. During certain intervals stirred tank reactors of reactor cascades used for slurry polymerization require maintenance work, for example because of failure of reactor equipment such as reactor slurry pumps. The multi-reactor slurry polymerization has to be stopped and one or all individual polymerization reactors need to be emptied. Emptying of polymerization reactors may also be caused by cleaning operations, e.g. due to reactor fouling, statutory inspections or for a variety of other reasons. Usually, upon stopping slurry polymerization in a reactor cascade only from the last polymerization reactor of the reactor cascade polymeric material can be isolated which fits the desired commercial product specification. The polymeric material of all the polymerization reactors upstream of said last polymerization reactor in most cases represent so-called off-spec material not suited for any further manufacturing steps such as extrusion or injection molding. As a consequence the content of all but the last polymerization reactor of a reactor cascade must be disposed of and treated as waste or converted into a grade which was actually not intended to be produced. This is disadvantageous both with respect to the amount of waste generated and the loss of valuable and desired on-spec polymeric material. Therefore, a continuing need exists for multi-reactor ethylene slurry polymerization processes in the production of polyethylene to minimize the amount of off-spec polymeric material, for example caused by maintenance work, and to ensure highest yields of polymeric material matching desired commercial product specifications of the wanted product grade.

### SUMMARY OF THE INVENTION

The present disclosure provides multi-reactor slurry polymerization processes for the preparation of polyethylene in a reactor cascade of two or more polymerization reactors.

The present disclosure provides slurry polymerization process for the preparation of polyethylene in a reactor cascade of two or more polymerization reactors comprising polymerizing monomers in a polymerization reactor at a temperature from 20°C to 200°C and a pressure from 0.1 MPa to 20 MPa to form polyethylene wherein the polymerization occurs in the presence of a catalyst, ethylene, diluent and optionally hydrogen and further optionally amounts of one or more C₃ to C₁₀ alpha-olefin comonomers in a reactor slurry, the reactor cascade comprising:
a first polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the first polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a second polymerization reactor through a reactor discharge line, a second reactor outlet arranged in the reactor bottom for feeding a reactor slurry comprising diluent, catalyst, polymer, unreacted monomer and optionally dissolved hydrogen to a second polymerization reactor and for emptying the first polymerization reactor, and a first reactor inlet for returning cooled slurry from the cooler as a first reactor slurry stream;
a second polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the second polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a third polymerization reactor through a reactor discharge line, a second reactor outlet arranged in the reactor bottom for feeding a reactor slurry comprising diluent, catalyst, polymer, unreacted monomer and optionally dissolved hydrogen to a third polymerization reactor and/or for emptying the second polymerization reactor, and a first reactor inlet for returning cooled slurry from the cooler as a first reactor slurry stream and optionally for feeding a second reactor slurry stream from the first polymerization reactor, and optionally a second reactor inlet for feeding a second reactor slurry stream from the first polymerization reactor;
optionally a third polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the third polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to an additional polymerization reactor through a reactor discharge line, a second reactor outlet arranged in the reactor bottom for feeding a reactor slurry comprising diluent, catalyst, polymer, unreacted monomer and optionally dissolved hydrogen to an additional polymerization reactor and/or for emptying the third polymerization reactor, and a first reactor inlet for returning cooled slurry from the cooler as a first reactor slurry stream and optionally for feeding a second reactor slurry stream from the second polymerization reactor, and optionally a second reactor inlet for feeding a second reactor slurry stream from the second polymerization reactor; and
further optionally an additional polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the additional polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to another additional polymerization reactor through a reactor discharge line, a second reactor outlet arranged in the reactor bottom for feeding a reactor slurry comprising diluent, catalyst, polymer, unreacted monomer and optionally dissolved hydrogen to another additional polymerization reactor and/or for emptying the additional polymerization reactor, and a first reactor inlet for returning cooled slurry from the cooler as a first reactor slurry stream and optionally for feeding a second reactor slurry stream from the third polymerization reactor, and optionally a second reactor inlet for feeding a second reactor slurry stream from the third polymerization reactor; and
wherein the polymerization comprises the steps of:
   a) contacting in the first polymerization reactor the amounts of ethylene, catalyst, diluent and optionally hydrogen and optionally the C₃ to C₁₀ alpha-olefin comonomers, thereby forming a slurry product comprising particulate polyethylene and a suspension medium;
   b) optionally withdrawing the slurry product from the first polymerization reactor through the first reactor outlet and, after having passed the cooler, feeding the slurry product to the first polymerization reactor of the reactor cascade through its first reactor inlet;
   c) optionally withdrawing the slurry product from the first polymerization reactor through the first reactor outlet and feeding the slurry product to the second polymerization reactor of the reactor cascade through its first or second reactor inlet;
   d) withdrawing the slurry product from the first polymerization reactor through the second reactor outlet and feeding the slurry product withdrawn through the second reactor outlet to the second polymerization reactor of the reactor cascade through its first or second reactor inlet,
   e) optionally feeding to the second polymerization reactor additional amounts of ethylene and/or diluent and optionally additional amounts of hydrogen and/or C₃ to C₁₀ alpha-olefin comonomers;
   f) contacting in the second polymerization reactor the slurry product fed to the second polymerization reactor and optionally the additional amounts of ethylene and/or diluent and optionally hydrogen and/or C₃ to C₁₀ alpha-olefin comonomers, thereby forming an additional amount of polyethylene in the slurry product;
   g) optionally withdrawing the slurry product from the second polymerization reactor through the first reactor outlet and, after having passed the cooler, feeding the slurry product to the second polymerization reactor of the reactor cascade through its first reactor inlet; and
   h1) withdrawing the slurry product from the second polymerization reactor through the first reactor outlet and isolating the particulate polyethylene from the suspension medium and
      optionally emptying the second polymerization reactor through its second reactor outlet and isolating the particulate polyethylene from the suspension medium; or
   h2) withdrawing the slurry product from the second polymerization reactor through the first reactor outlet and feeding the slurry product to the third polymerization reactor of the reactor cascade through its first or second reactor inlet and/or
      withdrawing the slurry product from the second polymerization reactor through the second reactor outlet and feeding the slurry product withdrawn through the second reactor outlet to the third polymerization reactor of the reactor cascade through its first or second reactor inlet,
   i) optionally feeding to the third polymerization reactor additional amounts of ethylene and/or diluent and optionally additional amounts of hydrogen and/or C₃ to C₁₀ alpha-olefin comonomers;
   j) contacting in the third polymerization reactor the slurry product fed to the third polymerization reactor and optionally the additional amounts of ethylene and/or diluent and optionally hydrogen and/or C₃ to C₁₀ alpha-olefin comonomers, thereby forming an additional amount of polyethylene in the slurry product;
   k) optionally withdrawing the slurry product from the third polymerization reactor through the first reactor outlet and, after having passed the cooler, feeding the slurry product to the third polymerization reactor of the reactor cascade through its first reactor inlet; and
   l) withdrawing the slurry product from the third polymerization reactor through the first reactor outlet and isolating the particulate polyethylene from the suspension medium and
      optionally emptying the third polymerization reactor through its second reactor outlet and isolating the particulate polyethylene from the suspension medium.

In some embodiments, the process of the present disclosure further comprises, following step I),
m) withdrawing the slurry product from the third polymerization reactor through the first reactor outlet and feeding the slurry product to the additional polymerization reactor of the reactor cascade through its first reactor inlet, and/or
   withdrawing the slurry product from the third polymerization reactor through the second reactor outlet and feeding the slurry product withdrawn through the second reactor outlet to the additional polymerization reactor of the reactor cascade through its first or second reactor inlet,
n) optionally feeding to the additional polymerization reactor additional amounts of ethylene and/or diluent and optionally additional amounts of hydrogen and/or C₃ to C₁₀ alpha-olefin comonomers;
o) contacting in the additional polymerization reactor the slurry product fed to the additional polymerization reactor and optionally the additional amounts of ethylene and/or diluent and optionally hydrogen and/or C₃ to C₁₀ alpha-olefin comonomers, thereby forming an additional amount of polyethylene in the slurry product;
p) optionally withdrawing the slurry product from the additional polymerization reactor through the first reactor outlet and, after having passed the cooler, feeding the slurry product to the additional polymerization reactor of the reactor cascade through its first reactor inlet;
q) withdrawing the slurry product from the additional polymerization reactor through the first reactor outlet and isolating the particulate polyethylene from the suspension medium and
   optionally emptying the additional polymerization reactor through its second reactor outlet and isolating the particulate polyethylene from the suspension medium,
r) optionally repeating steps m) to q) for all additional polymerization reactors of the reactor cascade.

In preferred embodiments, polymerizing monomers in a polymerization reactor is carried out at a temperature from 60°C to 95C and a pressure from 0.15 MPa to 3.0 MPa to form polyethylene.

In some embodiments, the first reactor outlet of the first polymerization reactor and/or the first reactor outlet of the second polymerization reactor are located in the upper two thirds of the reactor wall.

In some embodiments, the amounts of ethylene, catalyst, diluent and optionally hydrogen and optionally the C₃ to C₁₀ alpha-olefin comonomers are fed to the first polymerization reactor, to the second polymerization reactor, to the optional third polymerization reactor and to any optional additional polymerization reactor through the reactor bottom of the polymerization reactor.

In some embodiments, the reactor cascade further comprises one or more flashing vessels. With this embodiment the process of the present disclosure comprises feeding the slurry product withdrawn from the first, second, third or additional polymerization reactor through the first reactor outlet before being fed to the subsequent polymerization reactor of the reactor cascade through its first or second reactor inlet to said flashing vessel, subjecting said slurry product to a flashing step and feeding the flashed slurry product to said subsequent polymerization reactor of the reactor cascade.

In some embodiments, the reactor cascade further comprises downstream of each flashing vessel a flash vessel pump.

In some embodiments, the slurry product withdrawn from the first, second, third or additional polymerization reactor through the second reactor outlet is fed to the reactor discharge line on the suction side of the flash vessel pump through a connecting line.

In some embodiments, feeding of catalyst, ethylene, hydrogen and of C₃ to C₁₀ alpha-olefin comonomers to a polymerization reactor is stopped before emptying of said polymerization reactor through the second reactor outlet.

In some embodiments, feeding of catalyst, ethylene, hydrogen and of C₃ to C₁₀ alpha-olefin comonomers to the second polymerization reactor is stopped when the first polymerization reactor is empty, or
feeding of catalyst, ethylene, hydrogen and of C₃ to C₁₀ alpha-olefin comonomers to the third polymerization reactor is stopped when the second polymerization reactor is empty,
or feeding of catalyst, ethylene, hydrogen and of C₃ to C₁₀ alpha-olefin comonomers to the additional polymerization reactor is stopped when the third polymerization reactor is empty.

In some embodiments, during emptying of a polymerization reactor through the second reactor outlet the agitator for mixing the contents of the internal reactor volume of said polymerization reactor is stirred.

In some embodiments, the reactor cascade further comprises one or more slurry discharge control valves arranged in one or more of the reactor discharge lines and wherein the velocity of the discharge of the slurry product from a polymerization reactor is controlled by adjusting the slurry discharge control valve arranged downstream of the first and second reactor outlets of said polymerization reactor. The discharge of the slurry product can for example be controlled via the discharge control valve by putting said control valve from automatic mode to manual mode and maintaining the same opening, in particular initially, in order to safeguard that the surface level of the slurry product inside the first reactor decreases linearly. That is, the discharge of the slurry product can be controlled by taking care that the velocity by which the surface level of the slurry product decreases is kept constant. This can, for example, be accomplished by switching from automatic to manual mode. Preferably, upon having switched from automatic to manual mode the velocity by which the surface level of the slurry product decreases is at least initially kept constant.

In some embodiments, during emptying of a polymerization reactor through the second reactor outlet the velocity of the discharge of the slurry product is held constant.

In some embodiments, the reactor cascade system has two or three polymerization reactors.

In some embodiments, the two, three or more polymerization reactors of the reactor system are operated in series.

In some embodiments, the slurry product of the first polymerization reactor is emptied into the second polymerization reactor through the second reactor outlet of said first polymerization reactor, and wherein the slurry product of the second polymerization reactor is emptied through the second reactor outlet of said second polymerization reactor, optionally into the third polymerization reactor, and wherein the slurry product of the third polymerization reactor is emptied through the second reactor outlet of said third polymerization reactor, optionally into the additional polymerization reactor.

In some embodiments, the process of the present disclosure further comprises feeding the slurry product withdrawn from the first, second, third or additional polymerization reactor through the first reactor outlet before being fed to the subsequent polymerization reactor of the reactor cascade through its first or second reactor inlet to a separator, separating in the separator the particulate polyethylene from the suspension medium, recycling at least a part of the suspension medium separated from the slurry product in the separator as recycled suspension medium, and feeding the separated particulate polyethylene and/or the recycled suspension medium to said subsequent polymerization reactor of the reactor cascade.

In some embodiments, the diluent fed to the first polymerization reactor of the reactor cascade is fresh diluent.

In some embodiments, the flow rate of hydrogen to the subsequent polymerization reactor is adjusted to maintain the hydrogen/ethylene partial pressure ratio at a targeted hydrogen/ethylene partial pressure ratio by adjusting the pressure in the flashing vessel.

In some embodiments, the polyethylene produced by the process has a density in the range of from 0.935 g/cm³ to 0.97 g/cm³.

In some embodiments, the catalyst is selected from Phillips catalysts, Ziegler type catalysts or single-site catalysts.

In some embodiments, the one or more comonomers are fed to the polymerization reactor and the flow rates of the comonomers to the polymerization reactor are adjusted to maintain the comonomer/ethylene partial pressure ratios at targeted comonomer/ethylene partial pressure ratios.

In some embodiments, the comonomers are selected from the group consisting of 1-butene, 1-pentene, 1-hexene, 1-octene or mixtures thereof.

In some embodiments, the cooler is a heat exchanger.

The process of the present disclosure is optimized with respect to emptying one or more polymerization reactors of a reactor cascade.

### BRIEF DESCRIPTION OF THE DRAWINGS

To assist those of ordinary skill in the relevant art in making and using the subject matter hereof, reference is made to the appended drawings, wherein:

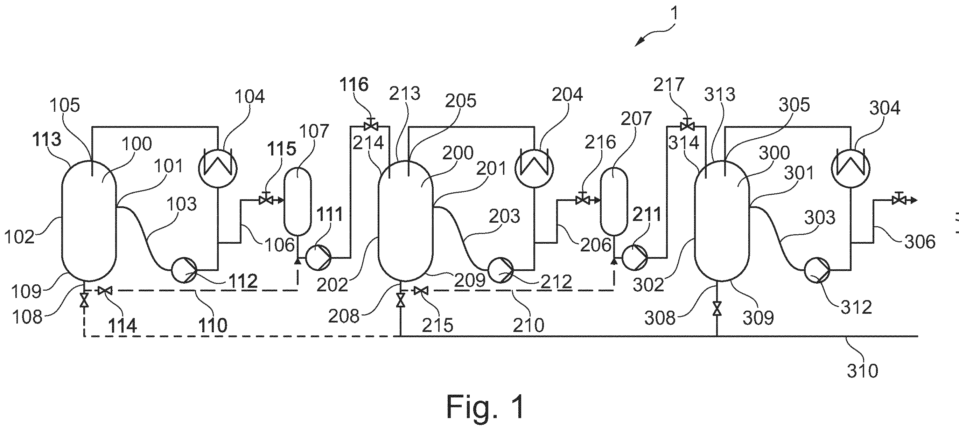

Figure 1 depicts a flow diagram illustrating a multi-reactor ethylene slurry cascade polymerization process for producing polyethylene.

### DETAILED DESCRIPTION OF THE INVENTION

The process of the present disclosure relates to a multi-reactor slurry polymerization of ethylene allowing to significantly reduce the amount of sub-standard polymer material if the slurry polymerization in the reactor cascade has to be interrupted or stopped, for example, due to maintenance work. Surprisingly it was found that discharging the reaction slurry of a polymerization reactor in order to empty said polymerization reactor to a subsequent polymerization reactor of the reactor cascade in accordance with the present disclosure greatly improves the overall efficiency of slurry polymerization of ethylene, resulting for example, in the reduction of downtime, reduction of number and duration of cleaning operations, reduction of maintenance costs and reduction of production loss. And, with the process of the present disclosure, operability is improved and throughput can be increased as well.

It should be understood that the use of "and/or" is defined inclusively, such that the term "a and/or b" should be read to include the sets: "a and b", "a or b", "a", "b". Preferably, "and" in most cases "a and/or b" relates to two entities "a" and "b", wherein at least one of said entities is present in the embodiment described.

It should also be understood that a particulate material in the meaning of the present disclosure usually has a mean particle diameter of from 50 µm to 3000 µm.

It should be noted that terms as "upper", "top" or "above" as well as "lower", "head", "bottom" or "below" refer to the arrangement of elements in the facility as assembled and as used and in accordance with the gravitational force of earth. Thus, a bottom section is closer to the center of earth than a top section. This does not preclude a non-usable stage, wherein the arrangement deviates, e.g. during transportation of a disassembled facility to the installation site.

In a preferred embodiment the method according to the present disclosure is about a slurry polymerization process for the preparation of polyethylene in a reactor cascade of two or more polymerization reactors comprising polymerizing monomers in a polymerization reactor at a temperature from 20°C to 200°C and a pressure from 0.1 MPa to 20 MPa to form polyethylene wherein the polymerization occurs in the presence of a catalyst, ethylene, diluent and optionally hydrogen and further optionally amounts of one or more C₃ to C₁₀ alpha-olefin comonomers in the reactor slurry,
the reactor cascade comprising: a first polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the first polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a second polymerization reactor through a reactor discharge line, a second reactor outlet arranged in the reactor bottom for feeding a reactor slurry comprising diluent, catalyst, polymer, unreacted monomer and optionally dissolved hydrogen to a second polymerization reactor and for emptying the first polymerization reactor, and a first reactor inlet for returning cooled slurry from the cooler as a first reactor slurry stream;
a second polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the second polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a third polymerization reactor through a reactor discharge line, a second reactor outlet arranged in the reactor bottom for feeding a reactor slurry comprising diluent, catalyst, polymer, unreacted monomer and optionally dissolved hydrogen to a third polymerization reactor and/or for emptying the second polymerization reactor, and a first reactor inlet for returning cooled slurry from the cooler as a first reactor slurry stream and optionally for feeding a second reactor slurry stream from the first polymerization reactor, and optionally a second reactor inlet for feeding a second reactor slurry stream from the first polymerization reactor; and
a third polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the third polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to an additional polymerization reactor through a reactor discharge line, a second reactor outlet arranged in the reactor bottom for feeding a reactor slurry comprising diluent, catalyst, polymer, unreacted monomer and optionally dissolved hydrogen to an additional polymerization reactor and/or for emptying the third polymerization reactor, and a first reactor inlet for returning cooled slurry from the cooler as a first reactor slurry stream and optionally for feeding a second reactor slurry stream from the second polymerization reactor, and optionally a second reactor inlet for feeding a second reactor slurry stream from the second polymerization reactor; and wherein the polymerization comprises the steps of:
a) contacting in the first polymerization reactor the amounts of ethylene, catalyst, diluent and optionally hydrogen and optionally the C₃ to C₁₀ alpha-olefin comonomers, thereby forming a slurry product comprising particulate polyethylene and a suspension medium;
b) withdrawing the slurry product from the first polymerization reactor through the first reactor outlet and, after having passed the cooler, feeding the slurry product to the first polymerization reactor of the reactor cascade through its first reactor inlet;
c) withdrawing the slurry product from the first polymerization reactor through the first reactor outlet and feeding the slurry product to the second polymerization reactor of the reactor cascade through its first or second reactor inlet;
d) withdrawing the slurry product from the first polymerization reactor through the second reactor outlet and feeding the slurry product withdrawn through the second reactor outlet to the second polymerization reactor of the reactor cascade through its first or second reactor inlet,
e) optionally feeding to the second polymerization reactor additional amounts of ethylene and/or diluent and optionally additional amounts of hydrogen and/or C₃ to C₁₀ alpha-olefin comonomers;
f) contacting in the second polymerization reactor the slurry product fed to the second polymerization reactor and optionally the additional amounts of ethylene and/or diluent and optionally hydrogen and/or C₃ to C₁₀ alpha-olefin comonomers, thereby forming an additional amount of polyethylene in the slurry product;
g) withdrawing the slurry product from the second polymerization reactor through the first reactor outlet and, after having passed the cooler, feeding the slurry product to the second polymerization reactor of the reactor cascade through its first reactor inlet; and
h2) withdrawing the slurry product from the second polymerization reactor through the first reactor outlet and feeding the slurry product to the third polymerization reactor of the reactor cascade through its first or second reactor inlet, and
   withdrawing the slurry product from the second polymerization reactor through the second reactor outlet and feeding the slurry product withdrawn through the second reactor outlet to the third polymerization reactor of the reactor cascade through its first or second reactor inlet,
i) optionally feeding to the third polymerization reactor additional amounts of ethylene and/or diluent and optionally additional amounts of hydrogen and/or C₃ to C₁₀ alpha-olefin comonomers;
j) contacting in the third polymerization reactor the slurry product fed to the third polymerization reactor and optionally the additional amounts of ethylene and/or diluent and optionally hydrogen and/or C₃ to C₁₀ alpha-olefin comonomers, thereby forming an additional amount of polyethylene in the slurry product;
k) withdrawing the slurry product from the third polymerization reactor through the first reactor outlet and, after having passed the cooler, feeding the slurry product to the third polymerization reactor of the reactor cascade through its first reactor inlet;
I) withdrawing the slurry product from the third polymerization reactor through the first reactor outlet and isolating the particulate polyethylene from the suspension medium and preferably emptying the third polymerization reactor through its second reactor outlet and isolating the particulate polyethylene from the suspension medium.

The reactor slurry is preferably withdrawn from the first polymerization reactor, the second polymerization reactor and optionally the third polymerization reactor through the first reactor outlet of the first polymerization reactor, through the first reactor outlet of the second polymerization reactor and optionally through the first reactor outlet of the third polymerization reactor using reactor slurry pumps. Such reactor slurry pumps allow feeding the reactor slurry to an external cooler and then back to the respective polymerization reactor and further partly transferring the slurry to subsequently arranged polymerization reactors or to a subsequently arranged separation device in which the suspension medium is separated from the solid particulate polyethylene.

To ensure that the reactor slurry pumps do not get defected, for example by a failure of the seals, cavitation in the pumps has to be avoided. One measure to avoid cavitation in pumps is to arrange the inlet of the suction line of the pump at a higher position than the pump itself. Consequently, in preferred embodiments of the present disclosure, the first reactor outlet of the first polymerization reactor and/or the first reactor out-let of the second polymerization reactor and optionally the first reactor outlet of the third polymerization reactor are located in the upper two thirds of the reactor wall, more preferably in the upper half of the reactor wall.

In a preferred embodiment, the amounts of ethylene, catalyst, diluent and optionally hydrogen and optionally the C₃ to C₁₀ alpha-olefin comonomers are fed to the first polymerization reactor, to the second polymerization reactor, to the optional third polymerization reactor and to any optional additional polymerization reactor through the reactor bottom of the respective polymerization reactor.

In some embodiments with the above-described process polymerization of monomers in a polymerization reactor is carried out at a temperature from 60°C to 95°C and a pressure from 0.15 MPa to 3.0 MPa to form polyethylene, preferably at temperatures from 70°C to 85°C, and at reactor pressures from 0.15 MPa to 3 MPa, preferably from 0.2 MPa to 2 MPa, more preferably from 0.25 MPa to 1.5 MPa.

Upon exiting the last polymerization reactor of the reactor cascade the slurry comprising solid polyolefin particles and a diluent are mechanically separated. The slurry product withdrawn from the last polymerization reactor of the reactor cascade is usually fed to a separator, which separates the particulate polyethylene from the suspension medium. At least a part of the suspension medium separated from the slurry product in the separator may be recycled as diluent to one or more polymerization reactors of the reactor cascade. Subsequently, the polyolefin particles obtained are usually subjected to a drying step furnishing a polyolefin powder.

Polyethylene polymers obtained by the process described in the present disclosure can be ethylene homopolymers or copolymers of ethylene containing up to 40 wt.% of C3-C8-1-alkenes. Preferably, the comonomers are chosen from 1-butene, 1-pentene, 1-hexene, 1-octene or mixtures thereof. Particular preference is given to a process in which ethylene is copolymerized with up to 20 wt.% of 1-butene, 1-hexene, or mixtures thereof.

The polymerization reactors of the reactor cascade used with the process of the present disclosure usually represent stirred tank reactors.

The polymerization in a polymerization reactor of a reactor cascade is generally conducted in a batchwise manner. That means, the polymerization takes place in a medium, the so-called suspension medium, which is in liquid or in supercritical state under the conditions in the respective polymerization reactor and in which the produced polyolefin is insoluble and forms solid particles. The solids content of the slurry is generally in the range of from 10 to 80 wt.-%, preferably in the range of from 20 to 40 wt.-%.

In some embodiments of the process of the present disclosure the suspension medium, which forms the liquid or supercritical phase of the slurry, commonly comprises as main component a diluent which can also comprise further components such as dissolved monomers or comonomers, dissolved cocatalysts or scavengers like aluminum alkyls, solved reaction auxiliaries like hydrogen or dissolved reaction products of the polymerization reaction like oligomers or waxes. That means, suspension medium does not mean the fed suspension medium such as hexane alone but rather the mixture of this fed suspension medium with the monomers dissolved therein. The ethylene concentration can easily be determined by gas-chromatographic analysis of the suspension medium.

Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. It is also possible to use unsaturated hydrocarbons such as monomers themselves like propylene as diluent. The diluent preferably has a boiling point which is significantly different from those of the monomers and comonomers used in order to make it possible for these starting materials to be recovered from a mixture, e.g. by distillation. Such diluents are for example hydrocarbons having a boiling point above 40°C or even above 60°C or mixtures comprising a high proportion of these hydrocarbons. Thus, the process of the present disclosure is especially advantageous if the polymerization takes place in a liquid suspension medium comprising more than 50 wt.% of saturated hydrocarbons having a boiling point of above 60 °C at 0.1 MPa or even comprising more than 80 wt.-% of saturated hydrocarbons having a boiling point of above 60 °C at 0.1 MPa.

Diluent fed to the reactor can either be fresh diluent or that which has been separated from the particulate polyethylene in the reactor slurry and then directly recycled, i.e., the recycled suspension medium, or combinations thereof. The fresh diluent can either be new, unprocessed material or diluent previously separated from the reactor slurry that has been processed to remove impurities; for example, low boiling components or waxes. Generally, any combination of recycled suspension medium and fresh diluent can be fed to the polymerization reactors in a multi-reactor system when operating in series.

The polymerization according to the process of the present disclosure can be carried out using all customary olefin polymerization catalysts. That means, the polymerization can be carried out using Phillips catalysts based on chromium oxide, using titanium-based Ziegler- or Ziegler-Natta-catalysts, or using single-site catalysts. For the purposes of the present disclosure, single-site catalysts are catalysts based on chemically uniform transition metal coordination compounds. Particularly suitable single-site catalysts are those comprising bulky sigma- or pi-bonded organic ligands, e.g. catalysts based on mono-Cp complexes, catalysts based on bis-Cp complexes, which are commonly designated as metallocene catalysts, or catalysts based on late transition metal complexes, in particular iron-bisimine complexes. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type preferably comprising a compound of titanium or vanadium, a compound of magnesium and optionally a particulate inorganic oxide as support.

With the process of the present disclosure bimodal or multimodal polyolefins are accessible. In this regard, the terms bimodal and multimodal refer to the modality of the molecular weight distribution. In addition to the molecular weight distribution, the polyolefin can also have a comonomer distribution, wherein preferably the average comonomer content of polymer chains with a higher molecular weight is higher than the average comonomer content of polymer chains with a lower molecular weight. The term "multimodal" as used herein shall include also "bimodal". Preferably, the polyethylene polymers are bimodal or trimodal.

The polyolefins are usually obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable technics are e.g. vibrating sieve analysis or sieve analysis under an air jet.

Preferred polyolefins obtainable with the process of the present disclosure are polyethylenes having an ethylene content of from 50 to 100 wt.%, more preferably from 80 to 100 wt.%, and in particular from 98 to 100 wt.%. Accordingly, the content of other olefins in the polyethylenes is preferably from 0 to 50 wt.%, more preferably from 0 to 20 wt.%, and in particular from 0 to 2 wt.%.

The density of preferred polyethylene compositions obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180 °C, 20MPa for 8 minutes with subsequent crystallization in boiling water for 30 minutes.

The process of the present disclosure is especially suitable for the preparation of polyethylene having a MFR_{21.6} at a temperature of 190 °C under a load of 21.6 kg, determined according to DIN EN ISO 1133:2005, condition G, of from 0.5 to 300 g/10 min, more preferably of from 1 to 100 g/10 min, even more preferably of from 1.2 to 100 g/10 min and especially of from 1.5 to 50 g/10 min.

According to the present disclosure, it has surprisingly been found to completely convert off-spec polymeric material of a multi-reactor slurry polymerization of ethylene which usually has been discarded to particulate on-spec polyethylene.

Further features and advantages of the present disclosure will become apparent from the following description, in which exemplary embodiments of the disclosure are explained with reference to schematic drawings, by way of example and without limiting the invention.

Reference is now made to Figure 1 which illustrates a preferred embodiment of the process of the present disclosure, as a three-reactor system 1 running in series, i.e. as cascade. The polymerization is carried out in three polymerization reactors 100, 200 and 300. Each of the reactors is equipped with a mixing unit comprising a motor, a rotating shaft and impellers (not shown).

Catalyst, ethylene and optionally 1-butene as comonomer are fed via separate lines (not shown) and/or hydrogen is dosed via another line (not shown) to the first reactor. Reactor slurry is withdrawn from reactor 100 through the first reactor outlet 101 arranged in the reactor wall 102 via line 103 and routed for external cooling through cooler 104, aided by cooler pump 112, and then back to polymerization reactor 100 through its first reactor inlet 105 arranged at the reactor head 113. Reactor slurry withdrawn from reactor 100 via line 103 is further partly transferred through line 106, which comprises a flash vessel 107, to the second reactor 200 via its second reactor inlet 214.

The polyethylene particles contained in the slurry transferred to reactor 200 comprise still active catalyst which continues to polymerize ethylene and, if present, comonomer in the second reactor 200. Again, ethylene and optionally 1-butene as comonomer and/or hydrogen are transferred to the second reactor through separate lines (not shown). Reactor slurry is withdrawn from reactor 200 through the first reactor outlet 201 arranged in the reactor wall 202 via line 203 and routed for external cooling through cooler 204, aided by cooler pump 212, and then back to polymerization reactor 200 through its first reactor inlet 205 arranged at the reactor head 213. Reactor slurry withdrawn from the second reactor 200 via line 203 is further partly transferred through line 206, which further comprises a flash vessel 207, to the third reactor 300 via its second reactor inlet 314.

The polyethylene particles contained in the slurry transferred to the third reactor 300 of the reactor cascade usually comprise still active catalyst which continues to polymerize ethylene and, if present, comonomer in reactor 300. Accordingly, ethylene and optionally 1-butene and/or hydrogen are dosed to the third reactor 300 through separate lines (not shown). Reactor slurry is withdrawn from reactor 300 through the first reactor outlet 301 arranged in the reactor wall 302 via line 303 and routed for external cooling through cooler 304 and then back to the third polymerization reactor 300 through its first reactor inlet 305 arranged at the reactor head 313. Reactor slurry withdrawn from the third reactor 300 via line 303 is further partly transferred through line 306, which may further comprise a flash vessel, cooling devices and/or other vessels (not shown), to a separation device (not shown).

In the separation device, the suspension medium is separated from the solid particulate polyethylene. The polyethylene is directed to a finishing section for further processing, including without limitation hydrocarbons removal and compounding. Recycled suspension medium can be directly routed back to the ethylene slurry polymerization reactors 100, 200 and/or 300 and/or being routed to a holding tank (not shown).

According to the process of the present disclosure in order to empty the first reactor 100 the slurry product, in particular said slurry product having a surface level below the first reactor outlet 101, is transferred through the second reactor outlet 108 arranged in the bottom 109 of the first reactor 100 via dashed line 110 which enters into line 106 downstream of the flash vessel 107 and upstream of a flash vessel pump 111. Accordingly, the reactor discharge line 110 is connected to the suction side of the flash vessel pump 111.

Further, once the first reactor 100 is completely discharged of the slurry product via the second reactor outlet 108 emptying of the second reactor 200 can start. Again, the slurry product, in particular said slurry product having a surface level below the first reactor outlet 201, is transferred through the second reactor outlet 208 arranged in the bottom 209 of the second reactor 200 via dashed line 210 which enters into line 206 downstream of the flash vessel 207 and upstream of a flash vessel pump 211. Accordingly, the reactor discharge line 210 is connected to the suction side of the flash vessel pump 211.

And, once the second reactor 200 is completely discharged of the slurry product via the second reactor outlet 208 emptying of the third reactor 300 can start. In said third reactor 300 the slurry content is on-spec so that the slurry product which cannot be discharged through the first reactor outlet 301 but which due to having a surface level below the first reactor outlet 301 has to be transferred through the second reactor outlet 308 arranged in the bottom 309 of the third reactor 300 and via line 310 contains or yields after conventional work up on-spec polymeric product.

The dotted section of line 310 between the first and the second reactor is not essential for the process of the present disclosure. Said dotted part of line 310 can for example be used for emergency purposes, i.e. for emptying part or all of the content of the first reactor containing off-spec material. And, if already in the second reactor on-spec material is produced without any off-spec material remaining, that section of line 310 following the dotted section can be used to discharge on-spec material from the second reactor via the second reactor outlet 208.

The polymerization conditions are controlled in such a way that the polymerization in the first reactor 100 of the reactor cascade is stopped, that is no more ethylene, catalyst, hydrogen and comonomers are fed to the first reactor 100, when said first reactor is emptied through the second reactor outlet 108. As a result the surface level of the slurry is no longer constant but decreasing. When no slurry product can be transferred via the first reactor outlet 101 to the cooler 104 any transfer to the cooler has to be stopped, for example by stopping the cooler pump 112, and the second reactor outlet 108 will be opened. During emptying via the second reactor outlet 108 the velocity of the discharge of the slurry product is controlled via control valve116 by putting that control valve from automatic mode to manual mode and initially maintaining the same opening in order to safeguard that the surface level of the slurry product inside the first reactor 100 decreases linearly. For emptying the first reactor the differential pressure by flash vessel pump 111 is can be utilized. During emptying the first reactor 100 into the second reactor 200 polymerization proceeds in the second and third polymerization reactors 200 and 300, respectively. The second reactor 200 is emptied into the third reactor 300 in the same manner as described for the first reactor 100. Again, control valve 217 is employed to control the velocity of the discharge of the slurry product. Preferably, when the second reactor 200 is empty no more ethylene, catalyst, hydrogen and comonomers are fed to the third reactor 300.

As the top of all reactors are equipped with gas analyzers the right velocity of slurry transfer can be monitored also by the gas composition. Via adjusting the opening of the control valve 116 and 217 respectively the desired constant reactor composition in the reactor which is still fed with monomer can be facilitated.

## Claims

1. A slurry polymerization process for the preparation of polyethylene in a reactor cascade of two or more polymerization reactors comprising polymerizing monomers in a polymerization reactor at a temperature from 20°C to 200°C and a pressure from 0.1 MPa to 20 MPa to form polyethylene, wherein the polymerization occurs in the presence of a catalyst, ethylene, diluent and optionally hydrogen and further optionally amounts of one or more C₃ to C₁₀ alpha-olefin comonomers in a reactor slurry, the reactor cascade comprising:
a first polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the first polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a second polymerization reactor through a reactor discharge line, a second reactor outlet arranged in the reactor bottom for feeding a reactor slurry comprising diluent, catalyst, polymer, unreacted monomer and optionally dissolved hydrogen to a second polymerization reactor and for emptying the first polymerization reactor, and a first reactor inlet for returning cooled slurry from the cooler as a first reactor slurry stream;
a second polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the second polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to a third polymerization reactor through a reactor discharge line, a second reactor outlet arranged in the reactor bottom for feeding a reactor slurry comprising diluent, catalyst, polymer, unreacted monomer and optionally dissolved hydrogen to a third polymerization reactor and/or for emptying the second polymerization reactor, and a first reactor inlet for returning cooled slurry from the cooler as a first reactor slurry stream and optionally for feeding a second reactor slurry stream from the first polymerization reactor, and optionally a second reactor inlet for feeding a second reactor slurry stream from the first polymerization reactor;
optionally a third polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the third polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to an additional polymerization reactor through a reactor discharge line, a second reactor outlet arranged in the reactor bottom for feeding a reactor slurry comprising diluent, catalyst, polymer, unreacted monomer and optionally dissolved hydrogen to an additional polymerization reactor and/or for emptying the third polymerization reactor, and a first reactor inlet for returning cooled slurry from the cooler as a first reactor slurry stream and optionally for feeding a second reactor slurry stream from the second polymerization reactor, and optionally a second reactor inlet for feeding a second reactor slurry stream from the second polymerization reactor; and
further optionally an additional polymerization reactor comprising a reactor wall, comprising an inner reactor wall surface, a reactor bottom connected to the reactor wall, a reactor head connected to the reactor wall, the reactor wall, reactor bottom and reactor head forming an internal reactor volume of the additional polymerization reactor, an agitator for mixing the contents of the internal reactor volume, a first reactor outlet arranged in the reactor wall for feeding a reactor slurry comprising diluent, catalyst, polymer, unreacted monomer and optionally dissolved hydrogen to a cooler or to another additional polymerization reactor through a reactor discharge line, a second reactor outlet arranged in the reactor bottom for feeding a reactor slurry comprising diluent, catalyst, polymer, unreacted monomer and optionally dissolved hydrogen to another additional polymerization reactor and/or for emptying the additional polymerization reactor, and a first reactor inlet for returning cooled slurry from the cooler as a first reactor slurry stream and optionally for feeding a second reactor slurry stream from the third polymerization reactor, and optionally a second reactor inlet for feeding a second reactor slurry stream from the third polymerization reactor; and
wherein the polymerization comprises the steps of:
a) contacting in the first polymerization reactor the amounts of ethylene, catalyst, diluent and optionally hydrogen and optionally the C₃ to C₁₀ alpha-olefin comonomers, thereby forming a slurry product comprising particulate polyethylene and a suspension medium;
b) optionally withdrawing the slurry product from the first polymerization reactor through the first reactor outlet and, after having passed the cooler, feeding the slurry product to the first polymerization reactor of the reactor cascade through its first reactor inlet;
c) optionally withdrawing the slurry product from the first polymerization reactor through the first reactor outlet and feeding the slurry product to the second polymerization reactor of the reactor cascade through its first or second reactor inlet;
d) withdrawing the slurry product from the first polymerization reactor through the second reactor outlet and feeding the slurry product withdrawn through the second reactor out-let to the second polymerization reactor of the reactor cascade through its first or second reactor inlet,
e) optionally feeding to the second polymerization reactor additional amounts of ethylene and/or diluent and optionally additional amounts of hydrogen and/or C₃ to C₁₀ alpha-olefin comonomers;
f) contacting in the second polymerization reactor the slurry product fed to the second polymerization reactor and optionally the additional amounts of ethylene and/or diluent and optionally hydrogen and/or C₃ to C₁₀ alpha-olefin comonomers, thereby forming an additional amount of polyethylene in the slurry product;
g) optionally withdrawing the slurry product from the second polymerization reactor through the first reactor outlet and, after having passed the cooler, feeding the slurry product to the second polymerization reactor of the reactor cascade through its first reactor inlet; and
h1) withdrawing the slurry product from the second polymerization reactor through the first reactor outlet and isolating the particulate polyethylene from the suspension medium and
optionally emptying the second polymerization reactor through its second reactor out-let and isolating the particulate polyethylene from the suspension medium; or
h2) withdrawing the slurry product from the second polymerization reactor through the first reactor outlet and feeding the slurry product to the third polymerization reactor of the reactor cascade through its first or second reactor inlet
and/or
withdrawing the slurry product from the second polymerization reactor through the second reactor outlet and feeding the slurry product withdrawn through the second reactor outlet to the third polymerization reactor of the reactor cascade through its first or second reactor inlet,
i) optionally feeding to the third polymerization reactor additional amounts of ethylene and/or diluent and optionally additional amounts of hydrogen and/or C₃ to C₁₀ alpha-olefin comonomers;
j) contacting in the third polymerization reactor the slurry product fed to the third polymerization reactor and optionally the additional amounts of ethylene and/or diluent and optionally hydrogen and/or C₃ to C₁₀ alpha-olefin comonomers, thereby forming an additional amount of polyethylene in the slurry product;
k) optionally withdrawing the slurry product from the third polymerization reactor through the first reactor outlet and, after having passed the cooler, feeding the slurry product to the third polymerization reactor of the reactor cascade through its first reactor inlet; and
I) withdrawing the slurry product from the third polymerization reactor through the first reactor outlet and isolating the particulate polyethylene from the suspension medium and
optionally emptying the third polymerization reactor through its second reactor outlet and isolating the particulate polyethylene from the suspension medium.

2. The process of claim 1, further comprising, following step I),
m) withdrawing the slurry product from the third polymerization reactor through the first reactor outlet and feeding the slurry product to the additional polymerization reactor of the reactor cascade through its first reactor inlet, and/or
withdrawing the slurry product from the third polymerization reactor through the second reactor outlet and feeding the slurry product withdrawn through the second reactor outlet to the additional polymerization reactor of the reactor cascade through its first or second reactor inlet,
n) optionally feeding to the additional polymerization reactor additional amounts of ethylene and/or diluent and optionally additional amounts of hydrogen and/or C₃ to C₁₀ alpha-olefin comonomers;
o) contacting in the additional polymerization reactor the slurry product fed to the additional polymerization reactor and optionally the additional amounts of ethylene and/or diluent and optionally hydrogen and/or C₃ to C₁₀ alpha-olefin comonomers, thereby forming an additional amount of polyethylene in the slurry product;
p) optionally withdrawing the slurry product from the additional polymerization reactor through the first reactor outlet and, after having passed the cooler, feeding the slurry product to the additional polymerization reactor of the reactor cascade through its first reactor inlet;
q) withdrawing the slurry product from the additional polymerization reactor through the first reactor outlet and isolating the particulate polyethylene from the suspension medium and
optionally emptying the additional polymerization reactor through its second reactor outlet and isolating the particulate polyethylene from the suspension medium;
r) optionally repeating steps m) to q) for all additional polymerization reactors of the reactor cascade.

3. The process of claim1 or 2, wherein the first reactor outlet of the first polymerization reactor and/or the first reactor outlet of the second polymerization reactor are located in the upper two thirds of the reactor wall.

4. The process of any of claims 1 to 3, wherein the amounts of ethylene, catalyst, diluent and optionally hydrogen and optionally the C₃ to C₁₀ alpha-olefin comonomers are fed to the first polymerization reactor, to the second polymerization reactor, to the optional third polymerization reactor and to any optional additional polymerization reactor through the reactor bottom of the polymerization reactor.

5. The process of any of claims 1 to 4, wherein the reactor cascade further comprises one or more flashing vessels, and wherein said process further comprises feeding the slurry product withdrawn from the first, second, third or additional polymerization reactor through the first reactor outlet before being fed to the subsequent polymerization reactor of the reactor cascade through its first or second reactor inlet to said flashing vessel, subjecting said slurry product to a flashing step and feeding the flashed slurry product to said subsequent polymerization reactor of the reactor cascade.

6. The process of claim 5, wherein the reactor cascade further comprises downstream of each flashing vessel a flash vessel pump.

7. The process of claim 6, wherein the slurry product withdrawn from the first, second, third or additional polymerization reactor through the second reactor outlet is fed to the reactor discharge line on the suction side of the flash vessel pump through a connecting line.

8. The process of any of claims 1 to 7, wherein feeding of catalyst, ethylene, hydrogen and of C₃ to C₁₀ alpha-olefin comonomers to a polymerization reactor is stopped before emptying of said polymerization reactor through the second reactor outlet.

9. The process of any of claims 1 to 8, wherein feeding of catalyst, ethylene, hydrogen and of C₃ to C₁₀ alpha-olefin comonomers to the second polymerization reactor is stopped when the first polymerization reactor is empty, or feeding of catalyst, ethylene, hydrogen and of C₃ to C₁₀ alpha-olefin comonomers to the third polymerization reactor is stopped when the second polymerization reactor is empty, or feeding of catalyst, ethylene, hydrogen and of C₃ to C₁₀ alpha-olefin comonomers to the additional polymerization reactor is stopped when the third polymerization reactor is empty.

10. The process of any of claims 1 to 9, wherein during emptying of a polymerization reactor through the second reactor outlet the agitator for mixing the contents of the internal reactor volume of said polymerization reactor is stirred.

11. The process of any of claims 1 to 10, wherein the reactor cascade further comprises one or more slurry discharge control valves arranged in one or more of the reactor discharge lines and wherein the velocity of the discharge of the slurry product from a polymerization reactor is controlled by adjusting the slurry discharge control valve arranged downstream of the first and second reactor outlets of said polymerization reactor.

12. The process of any of claims 1 to 11, wherein during emptying of a polymerization reactor through the second reactor outlet the velocity of the discharge of the slurry product is held constant.

13. The process of any of claims 1 to 12, wherein the slurry product of the first polymerization reactor is emptied into the second polymerization reactor through the second reactor outlet of said first polymerization reactor, and wherein the slurry product of the second polymerization reactor is emptied through the second reactor outlet of said second polymerization reactor, optionally into the third polymerization reactor, and wherein the slurry product of the third polymerization reactor is emptied through the second reactor outlet of said third polymerization reactor, optionally into the additional polymerization reactor.

14. The process of any of claims 1 to 13, further comprising feeding the slurry product withdrawn from the first, second, third or additional polymerization reactor through the first reactor outlet before being fed to the subsequent polymerization reactor of the reactor cascade through its first or second reactor inlet to a separator, separating in the separator the particulate polyethylene from the suspension medium, recycling at least a part of the suspension medium separated from the slurry product in the separator as recycled suspension medium, and feeding the separated particulate polyethylene and/or the recycled suspension medium to said subsequent polymerization reactor of the reactor cascade.

15. Use of the process of any of claims 1 to 14 for emptying at least one polymerization reactor.

## Patentansprüche

1. Suspensionspolymerisationsverfahren zur Herstellung von Polyethylen in einer Reaktorkaskade aus zwei oder mehr Polymerisationsreaktoren, umfassend Polymerisieren von Monomeren in einem Polymerisationsreaktor bei einer Temperatur von 20 °C bis 200 °C und einem Druck von 0,1 MPa bis 20 MPa, um Polyethylen zu bilden, wobei die Polymerisation in Gegenwart von einem Katalysator, Ethylen, Verdünnungsmittel und gegebenenfalls Wasserstoff und des Weiteren optionalen Mengen von einem oder mehreren C₃- bis C₁₀-alpha-Olefincomonomeren in einer Reaktorsuspension stattfindet, wobei die Reaktorkaskade umfasst:
einen ersten Polymerisationsreaktor, umfassend eine Reaktorwand, die eine innere Reaktorwandoberfläche, einen Reaktorboden, der mit der Reaktorwand verbunden ist, und einen Reaktorkopf, der mit der Reaktorwand verbunden ist, umfasst, wobei die Reaktorwand, der Reaktorboden und der Reaktorkopf ein Reaktorinnenvolumen des ersten Polymerisationsreaktors bilden, ein Rührwerk zum Mischen des Inhalts des Reaktorinnenvolumens, einen ersten Reaktorauslass, der in der Reaktorwand angeordnet ist, um eine Reaktorsuspension, die Verdünnungsmittel, Katalysator, Polymer, nicht-umgesetztes Monomer und gegebenenfalls gelösten Wasserstoff umfasst, durch eine Reaktoraustragsleitung in einen Kühler oder in einen zweiten Polymerisationsreaktor einzuspeisen, einen zweiten Reaktorauslass, der in dem Reaktorboden angeordnet ist, um eine Reaktorsuspension, die Verdünnungsmittel, Katalysator, Polymer, nicht-umgesetztes Monomer und gegebenenfalls gelösten Wasserstoff umfasst, in einen zweiten Polymerisationsreaktor einzuspeisen und um den ersten Polymerisationsreaktor zu leeren, und einen ersten Reaktoreinlass, um gekühlte Suspension aus dem Kühler als ersten Reaktorsuspensionsstrom zurückzugeben;
einen zweiten Polymerisationsreaktor, umfassend eine Reaktorwand, die eine innere Reaktorwandoberfläche, einen Reaktorboden, der mit der Reaktorwand verbunden ist, und einen Reaktorkopf, der mit der Reaktorwand verbunden ist, umfasst, wobei die Reaktorwand, der Reaktorboden und der Reaktorkopf ein Reaktorinnenvolumen des zweiten Polymerisationsreaktors bilden, ein Rührwerk zum Mischen des Inhalts des Reaktorinnenvolumens, einen ersten Reaktorauslass, der in der Reaktorwand angeordnet ist, um eine Reaktorsuspension, die Verdünnungsmittel, Katalysator, Polymer, nicht-umgesetztes Monomer und gegebenenfalls gelösten Wasserstoff umfasst, durch eine Reaktoraustragsleitung in einen Kühler oder in einen dritten Polymerisationsreaktor einzuspeisen, einen zweiten Reaktorauslass, der in dem Reaktorboden angeordnet ist, um eine Reaktorsuspension, die Verdünnungsmittel, Katalysator, Polymer, nicht-umgesetztes Monomer und gegebenenfalls gelösten Wasserstoff umfasst, in einen dritten Polymerisationsreaktor einzuspeisen und/oder um den zweiten Polymerisationsreaktor zu leeren, und einen ersten Reaktoreinlass, um gekühlte Suspension aus dem Kühler als ersten Reaktorsuspensionsstrom zurückzugeben und gegebenenfalls einen zweiten Reaktorsuspensionsstrom aus dem ersten Polymerisationsreaktor einzuspeisen, und gegebenenfalls einen zweiten Reaktoreinlass, um einen zweiten Reaktorsuspensionsstrom aus dem ersten Polymerisationsreaktor einzuspeisen;
gegebenenfalls einen dritten Polymerisationsreaktor, umfassend eine Reaktorwand, die eine innere Reaktorwandoberfläche, einen Reaktorboden, der mit der Reaktorwand verbunden ist, und einen Reaktorkopf, der mit der Reaktorwand verbunden ist, umfasst, wobei die Reaktorwand, der Reaktorboden und der Reaktorkopf ein Reaktorinnenvolumen des dritten Polymerisationsreaktors bilden, ein Rührwerk zum Mischen des Inhalts des Reaktorinnenvolumens, einen ersten Reaktorauslass, der in der Reaktorwand angeordnet ist, um eine Reaktorsuspension, die Verdünnungsmittel, Katalysator, Polymer, nicht-umgesetztes Monomer und gegebenenfalls gelösten Wasserstoff umfasst, durch eine Reaktoraustragsleitung in einen Kühler oder in einen zusätzlichen Polymerisationsreaktor einzuspeisen, einen zweiten Reaktorauslass, der in dem Reaktorboden angeordnet ist, um eine Reaktorsuspension, die Verdünnungsmittel, Katalysator, Polymer, nicht-umgesetztes Monomer und gegebenenfalls gelösten Wasserstoff umfasst, in einen zusätzlichen Polymerisationsreaktor einzuspeisen und/oder um den dritten Polymerisationsreaktor zu leeren, und einen ersten Reaktoreinlass, um gekühlte Suspension aus dem Kühler als ersten Reaktorsuspensionsstrom zurückzugeben und gegebenenfalls einen zweiten Reaktorsuspensionsstrom aus dem zweiten Polymerisationsreaktor einzuspeisen, und gegebenenfalls einen zweiten Reaktoreinlass, um einen zweiten Reaktorsuspensionsstrom aus dem zweiten Polymerisationsreaktor einzuspeisen; und
des Weiteren gegebenenfalls einen zusätzlichen Polymerisationsreaktor, umfassend eine Reaktorwand, die eine innere Reaktorwandoberfläche, einen Reaktorboden, der mit der Reaktorwand verbunden ist, und einen Reaktorkopf, der mit der Reaktorwand verbunden ist, umfasst, wobei die Reaktorwand, der Reaktorboden und der Reaktorkopf ein Reaktorinnenvolumen des zusätzlichen Polymerisationsreaktors bilden, ein Rührwerk zum Mischen des Inhalts des Reaktorinnenvolumens, einen ersten Reaktorauslass, der in der Reaktorwand angeordnet ist, um eine Reaktorsuspension, die Verdünnungsmittel, Katalysator, Polymer, nicht-umgesetztes Monomer und gegebenenfalls gelösten Wasserstoff umfasst, durch eine Reaktoraustragsleitung in einen Kühler oder in einen anderen zusätzlichen Polymerisationsreaktor einzuspeisen, einen zweiten Reaktorauslass, der in dem Reaktorboden angeordnet ist, um eine Reaktorsuspension, die Verdünnungsmittel, Katalysator, Polymer, nicht-umgesetztes Monomer und gegebenenfalls gelösten Wasserstoff umfasst, in einen anderen zusätzlichen Polymerisationsreaktor einzuspeisen und/oder um den zusätzlichen Polymerisationsreaktor zu leeren, und einen ersten Reaktoreinlass, um gekühlte Suspension aus dem Kühler als ersten Reaktorsuspensionsstrom zurückzugeben und gegebenenfalls einen zweiten Reaktorsuspensionsstrom aus dem dritten Polymerisationsreaktor einzuspeisen, und gegebenenfalls einen zweiten Reaktoreinlass, um einen zweiten Reaktorsuspensionsstrom aus dem dritten Polymerisationsreaktor einzuspeisen;
wobei die Polymerisation die Schritte umfasst:
a) Kontaktieren der Mengen an Ethylen, Katalysator, Verdünnungsmittel und gegebenenfalls Wasserstoff und gegebenenfalls den C₃- bis C₁₀-alpha-Olefincomonomeren in dem ersten Polymerisationsreaktor, wodurch ein Suspensionsprodukt gebildet wird, welches teilchenförmiges Polyethylen und ein Suspensionsmedium umfasst;
b) gegebenenfalls Austragen des Suspensionsprodukts aus dem ersten Polymerisationsreaktor durch den ersten Reaktorauslass, und Einspeisen des Suspensionsprodukts, nachdem es den Kühler durchlaufen hat, in den ersten Polymerisationsreaktor der Reaktorkaskade durch dessen ersten Reaktoreinlass;
c) gegebenenfalls Austragen des Suspensionsprodukts aus dem ersten Polymerisationsreaktor durch den ersten Reaktorauslass, und Einspeisen des Suspensionsprodukts in den zweiten Polymerisationsreaktor der Reaktorkaskade durch dessen ersten oder zweiten Reaktoreinlass;
d) Austragen des Suspensionsprodukts aus dem ersten Polymerisationsreaktor durch den zweiten Reaktorauslass, und Einspeisen des durch den zweiten Reaktorauslass ausgetragenen Suspensionsprodukts in den zweiten Polymerisationsreaktor der Reaktorkaskade durch dessen ersten oder zweiten Reaktoreinlass;
e) gegebenenfalls Einspeisen von zusätzlichen Mengen an Ethylen und/oder Verdünnungsmittel und gegebenenfalls zusätzlichen Mengen an Wasserstoff und/oder C₃- bis C₁₀-alpha-Olefincomonomeren in den zweiten Polymerisationsreaktor;
f) Kontaktieren des in den zweiten Polymerisationsreaktor eingespeisten Suspensionsprodukts und gegebenenfalls der zusätzlichen Mengen an Ethylen und/oder Verdünnungsmittel und gegebenenfalls Wasserstoff und/oder C₃- bis C₁₀-alpha-Olefin-comonomeren in dem zweiten Polymerisationsreaktor, wodurch eine zusätzliche Menge an Polyethylen in dem Suspensionsprodukt gebildet wird;
g) gegebenenfalls Austragen des Suspensionsprodukts aus dem zweiten Polymerisationsreaktor durch den ersten Reaktorauslass, und Einspeisen des Suspensionsprodukts, nachdem es den Kühler durchlaufen hat, in den zweiten Polymerisationsreaktor der zweiten Reaktorkaskade durch dessen ersten Reaktoreinlass;
h1) Austragen des Suspensionsprodukts aus dem zweiten Polymerisationsreaktor durch den ersten Reaktorauslass, und Isolieren des teilchenförmigen Polyethylens aus dem Suspensionsmedium, und
gegebenenfalls Leeren des zweiten Polymerisationsreaktors durch dessen zweiten Reaktorauslass, und Isolieren des teilchenförmigen Polyethylens aus dem Suspensionsmedium, oder
h2) Austragen des Suspensionsprodukts aus dem zweiten Polymerisationsreaktor durch den ersten Reaktorauslass, und Einspeisen des Suspensionsprodukts in den dritten Polymerisationsreaktor der Reaktorkaskade durch dessen ersten oder zweiten Reaktoreinlass;
und/oder
Austragen des Suspensionsprodukts aus dem zweiten Polymerisationsreaktor durch den zweiten Reaktorauslass, und Einspeisen des durch den zweiten Reaktorauslass ausgetragenen Suspensionsprodukts in den dritten Polymerisationsreaktor der Reaktorkaskade durch dessen ersten oder zweiten Reaktoreinlass;
i) gegebenenfalls Einspeisen von zusätzlichen Mengen an Ethylen und/oder Verdünnungsmittel und gegebenenfalls zusätzlichen Mengen an Wasserstoff und/oder C₃- bis C₁₀-alpha-Olefincomonomeren in den dritten Polymerisationsreaktor;
j) Kontaktieren des in den dritten Polymerisationsreaktor eingespeisten Suspensionsprodukts und gegebenenfalls der zusätzlichen Mengen an Ethylen und/oder Verdünnungsmittel und gegebenenfalls Wasserstoff und/oder C₃- bis C₁₀-alpha-Olefincomonomeren in dem dritten Polymerisationsreaktor, wodurch eine zusätzliche Menge an Polyethylen in dem Suspensionsprodukt gebildet wird;
k) gegebenenfalls Austragen des Suspensionsprodukts aus dem dritten Polymerisationsreaktor durch den ersten Reaktorauslass, und Einspeisen des Suspensionsprodukts, nachdem es den Kühler durchlaufen hat, in den dritten Polymerisationsreaktor der Reaktorkaskade durch dessen ersten Reaktoreinlass; und
1) Austragen des Suspensionsprodukts aus dem dritten Polymerisationsreaktor durch den ersten Reaktorauslass, und Isolieren des teilchenförmigen Polyethylens aus dem Suspensionsmedium, und
gegebenenfalls Leeren des dritten Polymerisationsreaktors durch dessen zweiten Reaktorauslass, und Isolieren des teilchenförmigen Polyethylens aus dem Suspensionsmedium.

2. Verfahren nach Anspruch 1, ferner umfassend die folgenden Schritte nach Schritt 1):
m) Austragen des Suspensionsprodukts aus dem dritten Polymerisationsreaktor durch den ersten Reaktorauslass, und Einspeisen des Suspensionsprodukts in den zusätzlichen Polymerisationsreaktor der Reaktorkaskade durch dessen ersten Reaktoreinlass; und/oder Austragen des Suspensionsprodukts aus dem dritten Polymerisationsreaktor durch den zweiten Reaktorauslass, und Einspeisen des durch den zweiten Reaktorauslass ausgetragenen Suspensionsprodukts in den zusätzlichen Polymerisationsreaktor der Reaktorkaskade durch dessen ersten oder zweiten Reaktoreinlass;
n) gegebenenfalls Einspeisen von zusätzlichen Mengen an Ethylen und/oder Verdünnungsmittel und gegebenenfalls zusätzlichen Mengen an Wasserstoff und/oder C₃- bis C₁₀-alpha-Olefincomonomeren in den zusätzlichen Polymerisationsreaktor;
o) Kontaktieren des in den zusätzlichen Polymerisationsreaktor eingespeisten Suspensionsprodukts und gegebenenfalls der zusätzlichen Mengen an Ethylen und/oder Verdünnungsmittel und gegebenenfalls Wasserstoff und/oder C₃- bis C₁₀-alpha-Olefincomonomeren in dem zusätzlichen Polymerisationsreaktor, wodurch eine zusätzliche Menge an Polyethylen in dem Suspensionsprodukt gebildet wird;
p) gegebenenfalls Austragen des Suspensionsprodukts aus dem zusätzlichen Polymerisationsreaktor durch den ersten Reaktorauslass, und Einspeisen des Suspensionsprodukts, nachdem es den Kühler durchlaufen hat, in den zusätzlichen Polymerisationsreaktor der Reaktorkaskade durch dessen ersten Reaktoreinlass;
q) Austragen des Suspensionsprodukts aus dem zusätzlichen Polymerisationsreaktor durch den ersten Reaktorauslass, und Isolieren des teilchenförmigen Polyethylens aus dem Suspensionsmedium, und
gegebenenfalls Leeren des zusätzlichen Polymerisationsreaktors durch dessen zweiten Reaktorauslass, und Isolieren des teilchenförmigen Polyethylens aus dem Suspensionsmedium;
r) gegebenenfalls Wiederholen der Schritte m) bis q) für alle zusätzlichen Polymerisationsreaktoren der Reaktorkaskade.

3. Verfahren nach Anspruch 1 oder 2, wobei der erste Reaktorauslass des ersten Polymerisationsreaktors und/oder der erste Reaktorauslass des zweiten Polymerisationsreaktors sich in den oberen beiden Dritteln der Reaktorwand befindet bzw. befinden.

4. Verfahren nach einem der Ansprüche 1 bis 3, wobei die Mengen an Ethylen, Katalysator, Verdünnungsmittel und gegebenenfalls Wasserstoff und gegebenenfalls den C₃- bis C₁₀-alpha-Olefincomonomeren durch den Reaktorboden des Polymerisationsreaktors in den ersten Polymerisationsreaktor, den zweiten Polymerisationsreaktor, den optionalen dritten Polymerisationsreaktor und jedweden optionalen zusätzlichen Polymerisationsreaktor eingespeist werden.

5. Verfahren nach einem der Ansprüche 1 bis 4, wobei die Reaktorkaskade des Weiteren einen oder mehrere Entspannungsbehälter umfasst, und wobei das Verfahren des Weiteren umfasst, dass das Suspensionsprodukt, das aus dem ersten, zweiten, dritten oder zusätzlichen Polymerisationsreaktor durch den ersten Reaktorauslass ausgetragen worden ist, in den Entspannungsbehälter eingespeist wird, bevor es in den nachfolgenden Polymerisationsreaktor der Reaktorkaskade durch dessen ersten oder zweiten Reaktoreinlass eingespeist wird, dass das Suspensionsprodukt einem Entspannungsschritt unterzogen wird, und dass das entspannungsverdampfte Suspensionsprodukt in den nachfolgenden Polymerisationsreaktor der Reaktorkaskade eingespeist wird.

6. Verfahren nach Anspruch 5, wobei die Reaktorkaskade des Weiteren nachgeschaltet zu jedem Entspannungsbehälter eine Entspannungsbehälterpumpe umfasst.

7. Verfahren nach Anspruch 6, wobei das aus dem ersten, zweiten, dritten oder zusätzlichen Polymerisationsreaktor durch den zweiten Reaktorauslass ausgetragene Suspensionsprodukt durch eine Verbindungsleitung in die Reaktoraustragungsleitung auf der Saugseite der Entspannungsbehälterpumpe eingespeist wird.

8. Verfahren nach einem der Ansprüche 1 bis 7, wobei das Einspeisen von Katalysator, Ethylen, Wasserstoff und C₃- bis C₁₀-alpha-Olefincomonomeren in einen Polymerisationsreaktor gestoppt wird, bevor der Polymerisationsreaktor durch den zweiten Reaktorauslass geleert wird.

9. Verfahren nach einem der Ansprüche 1 bis 8, wobei das Einspeisen von Katalysator, Ethylen, Wasserstoff und C₃- bis C₁₀-alpha-Olefincomonomeren in den zweiten Polymerisationsreaktor gestoppt wird, wenn der erste Polymerisationsreaktor leer ist, oder das Einspeisen von Katalysator, Ethylen, Wasserstoff und C₃- bis C₁₀-alpha-Olefincomonomeren in den dritten Polymerisationsreaktor gestoppt wird, wenn der zweite Polymerisationsreaktor leer ist, oder Einspeisen von Katalysator, Ethylen, Wasserstoff und C₃- bis C₁₀-alpha-Ole-fincomonomeren in den zusätzlichen Polymerisationsreaktor gestoppt wird, wenn der dritte Polymerisationsreaktor leer ist.

10. Verfahren nach einem der Ansprüche 1 bis 9, wobei während des Leerens eines Polymerisationsreaktors durch den zweiten Reaktorauslass das Rührwerk zum Mischen des Inhalts des Reaktorinnenvolumens des Polymerisationsreaktors gerührt wird.

11. Verfahren nach einem der Ansprüche 1 bis 10, wobei die Reaktorkaskade des Weiteren ein oder mehrere Steuerventile für die Austragung der Suspension umfasst, die in einer oder mehreren der Reaktoraustragleitungen angeordnet sind, und wobei die Geschwindigkeit der Austragung des Suspensionsprodukts aus einem Polymerisationsreaktor gesteuert wird, indem das dem ersten und zweiten Reaktorauslass des Polymerisationsreaktors nachgeschaltete Steuerventil für das Austragen der Suspension angepasst wird.

12. Verfahren nach einem der Ansprüche 1 bis 11, wobei während des Leerens eines Polymerisationsreaktors durch den zweiten Reaktorauslass die Geschwindigkeit des Austragens des Suspensionsprodukts konstant gehalten wird.

13. Verfahren nach einem der Ansprüche 1 bis 12, wobei das Suspensionsprodukt des ersten Polymerisationsreaktors durch den zweiten Reaktorauslass des ersten Polymerisationsreaktors in den zweiten Polymeriationsreaktor geleert wird, und wobei das Suspensionsprodukt des zweiten Polymerisationsreaktors durch den zweiten Reaktorauslass des zweiten Polymeriationsreaktors geleert wird, gegebenenfalls in den dritten Polymerisationsreaktor, und wobei das Suspensionsprodukt des dritten Polymerisationsreaktors durch den zweiten Reaktorauslass des dritten Polymerisationsreaktors geleert wird, gegebenenfalls in den zusätzlichen Polymerisationsreaktor.

14. Verfahren nach einem der Ansprüche 1 bis 13, des Weiteren umfassend Einspeisen des aus dem ersten, zweiten, dritten oder zusätzlichen Polymerisationsreaktor durch den ersten Reaktorauslass ausgetragenen Suspensionsprodukts in einen Separator, bevor es in den nachfolgenden Polymerisationsreaktor der Reaktorkaskade durch dessen ersten oder zweiten Reaktoreinlass eingespeist wird, Trennen des teilchenförmigen Polyethylens von dem Suspensionsmedium in dem Separator, Rückführen von mindestens einem Teil des von dem Suspensionsprodukt in dem Separator abgetrennten Suspensionsmediums als zurückgeführtes Suspensionsmedium, und Einspeisen des abgetrennten teilchenförmigen Polyethylens und/oder des rückgeführten Suspensionsmediums in den nachfolgenden Polymerisationsreaktor der Reaktorkaskade.

15. Verwendung des Verfahrens nach einem der Ansprüche 1 bis 14 zum Leeren von mindestens einem Polymerisationsreaktor.

## Revendications

1. Procédé de polymérisation en suspension pour la préparation de polyéthylène dans une cascade de réacteurs de deux ou de plusieurs réacteurs de polymérisation, comprenant la polymérisation de monomères dans un réacteur de polymérisation à une température de 20°C à 200°C et à une pression de 0,1 MPa à 20 MPa pour former du polyéthylène, la polymérisation se produisant en présence d'un catalyseur, d'éthylène, de diluant et éventuellement d'hydrogène et en outre éventuellement des quantités d'un ou de plusieurs comonomères d'alpha-oléfine en C₃ à C₁₀ dans une suspension de réacteur, la cascade de réacteurs comprenant :
un premier réacteur de polymérisation comprenant une paroi de réacteur, comprenant une surface de paroi de réacteur interne, un fond de réacteur relié à la paroi de réacteur, une tête de réacteur reliée à la paroi de réacteur, la paroi de réacteur, le fond de réacteur et la tête de réacteur formant un volume de réacteur interne du premier réacteur de polymérisation, un agitateur pour mélanger le contenu du volume de réacteur interne, une première sortie de réacteur disposée dans la paroi de réacteur pour l'alimentation d'une suspension de réacteur comprenant du diluant, du catalyseur, du polymère, du monomère n'ayant pas réagi et éventuellement de l'hydrogène dissous dans un refroidisseur ou dans un deuxième réacteur de polymérisation via une conduite d'évacuation de réacteur, une deuxième sortie de réacteur disposée dans le fond de réacteur pour l'alimentation d'une suspension de réacteur comprenant du diluant, du catalyseur, du polymère, du monomère n'ayant pas réagi et éventuellement de l'hydrogène dissous dans un deuxième réacteur de polymérisation et pour le vidage du premier réacteur de polymérisation et une première entrée de réacteur pour le retour de la suspension refroidie provenant du refroidisseur sous la forme d'un premier flux de suspension de réacteur ;
un deuxième réacteur de polymérisation comprenant une paroi de réacteur, comprenant une surface de paroi de réacteur interne, un fond de réacteur relié à la paroi de réacteur, une tête de réacteur reliée à la paroi de réacteur, la paroi de réacteur, le fond de réacteur et la tête de réacteur formant un volume de réacteur interne du deuxième réacteur de polymérisation, un agitateur pour mélanger le contenu du volume de réacteur interne, une première sortie de réacteur disposée dans la paroi de réacteur pour l'alimentation d'une suspension de réacteur comprenant du diluant, du catalyseur, du polymère, du monomère n'ayant pas réagi et éventuellement de l'hydrogène dissous dans un refroidisseur ou dans un troisième réacteur de polymérisation via une conduite d'évacuation de réacteur, une deuxième sortie de réacteur disposée dans le fond de réacteur pour l'alimentation d'une suspension de réacteur comprenant du diluant, du catalyseur, du polymère, du monomère n'ayant pas réagi et éventuellement de l'hydrogène dissous dans un troisième réacteur de polymérisation et/ou pour le vidage du deuxième réacteur de polymérisation et une première entrée de réacteur pour le retour de la suspension refroidie provenant du refroidisseur en tant que premier flux de suspension de réacteur et éventuellement pour l'alimentation en un deuxième flux de suspension de réacteur provenant du premier réacteur de polymérisation et éventuellement une deuxième entrée de réacteur pour l'alimentation en un deuxième flux de suspension de réacteur provenant du premier réacteur de polymérisation ;
éventuellement, un troisième réacteur de polymérisation comprenant une paroi de réacteur, comprenant une surface de paroi de réacteur interne, un fond de réacteur relié à la paroi de réacteur, une tête de réacteur reliée à la paroi de réacteur, la paroi de réacteur, le fond de réacteur et la tête de réacteur formant un volume de réacteur interne du troisième réacteur de polymérisation, un agitateur pour mélanger le contenu du volume de réacteur interne, une première sortie de réacteur disposée dans la paroi de réacteur pour l'alimentation d'une suspension de réacteur comprenant du diluant, du catalyseur, du polymère, du monomère n'ayant pas réagi et éventuellement de l'hydrogène dissous dans un refroidisseur ou dans un réacteur de polymérisation supplémentaire via une conduite d'évacuation de réacteur, une deuxième sortie de réacteur disposée dans le fond de réacteur pour l'alimentation d'une suspension de réacteur comprenant du diluant, du catalyseur, du polymère, du monomère n'ayant pas réagi et éventuellement de l'hydrogène dissous dans un réacteur de polymérisation supplémentaire et/ou pour le vidage du troisième réacteur de polymérisation et une première entrée de réacteur pour le retour de la suspension refroidie provenant du refroidisseur en tant que premier flux de suspension de réacteur et éventuellement pour l'alimentation en un deuxième flux de suspension de réacteur provenant du deuxième réacteur de polymérisation et éventuellement une deuxième entrée de réacteur pour l'alimentation en un deuxième flux de suspension de réacteur provenant du deuxième réacteur de polymérisation ; et
en outre éventuellement un réacteur de polymérisation supplémentaire comprenant une paroi de réacteur, comprenant une surface de paroi de réacteur interne, un fond de réacteur relié à la paroi de réacteur, une tête de réacteur reliée à la paroi de réacteur, la paroi de réacteur, le fond de réacteur et la tête de réacteur formant un volume de réacteur interne du réacteur de polymérisation supplémentaire, un agitateur pour mélanger le contenu du volume de réacteur interne, une première sortie de réacteur disposée dans la paroi de réacteur pour l'alimentation d'une suspension de réacteur comprenant du diluant, du catalyseur, du polymère, du monomère n'ayant pas réagi et éventuellement de l'hydrogène dissous dans un refroidisseur ou dans un autre réacteur de polymérisation supplémentaire via une conduite d'évacuation de réacteur, une deuxième sortie de réacteur disposée dans le fond de réacteur pour l'alimentation d'une suspension de réacteur comprenant du diluant, du catalyseur, du polymère, du monomère n'ayant pas réagi et éventuellement de l'hydrogène dissous dans un autre réacteur de polymérisation supplémentaire et/ou pour le vidage du réacteur de polymérisation supplémentaire et une première entrée de réacteur pour le retour de la suspension refroidie provenant du refroidisseur en tant que premier flux de suspension de réacteur et éventuellement pour l'alimentation en un deuxième flux de suspension de réacteur provenant du troisième réacteur de polymérisation et éventuellement une deuxième entrée de réacteur pour l'alimentation en un deuxième flux de suspension de réacteur provenant du troisième réacteur de polymérisation ; et
la polymérisation comprenant les étapes de :
a) mise en contact, dans le premier réacteur de polymérisation, des quantités d'éthylène, de catalyseur, de diluant et éventuellement d'hydrogène et éventuellement des comonomères d'alpha-oléfine en C₃ à C₁₀, formant ainsi un produit en suspension comprenant du polyéthylène particulaire et un milieu de suspension ;
b) éventuellement, soutirage du produit en suspension du premier réacteur de polymérisation via la première sortie de réacteur et, après avoir traversé le refroidisseur, alimentation du produit en suspension dans le premier réacteur de polymérisation de la cascade de réacteurs via sa première entrée de réacteur ;
c) éventuellement, soutirage du produit en suspension du premier réacteur de polymérisation via la première sortie de réacteur et alimentation du produit en suspension dans le deuxième réacteur de polymérisation de la cascade de réacteurs via sa première ou sa deuxième entrée de réacteur ;
d) soutirage du produit en suspension du premier réacteur de polymérisation via la deuxième sortie de réacteur et alimentation du produit en suspension soutiré via la deuxième sortie de réacteur dans le deuxième réacteur de polymérisation de la cascade de réacteurs via sa première ou sa deuxième entrée de réacteur,
e) éventuellement, alimentation du deuxième réacteur de polymérisation en quantités supplémentaires d'éthylène et/ou de diluant et éventuellement en quantités supplémentaires d'hydrogène et/ou de comonomères d'alpha-oléfine en C₃ à C₁₀ ;
f) mise en contact, dans le deuxième réacteur de polymérisation, du produit en suspension alimenté dans le deuxième réacteur de polymérisation et éventuellement des quantités supplémentaires d'éthylène et/ou de diluant et éventuellement d'hydrogène et/ou de comonomères d'alpha-oléfine en C₃ à C₁₀, formant ainsi une quantité supplémentaire de polyéthylène dans le produit en suspension ;
g) éventuellement, soutirage du produit en suspension du deuxième réacteur de polymérisation via la première sortie de réacteur et, après avoir traversé le refroidisseur, alimentation du produit en suspension dans le deuxième réacteur de polymérisation de la cascade de réacteurs via sa première entrée de réacteur ; et
h1) soutirage du produit en suspension du deuxième réacteur de polymérisation via la première sortie de réacteur et isolement du polyéthylène particulaire à partir du milieu de suspension et
éventuellement, vidage du deuxième réacteur de polymérisation via sa deuxième sortie de réacteur et isolement du polyéthylène particulaire à partir du milieu de suspension ; ou
h2) soutirage du produit en suspension du deuxième réacteur de polymérisation via la première sortie de réacteur et alimentation du produit en suspension dans le troisième réacteur de polymérisation de la cascade de réacteurs via sa première ou sa deuxième entrée de réacteur et/ou
soutirage du produit en suspension du deuxième réacteur de polymérisation via la deuxième sortie de réacteur et alimentation du produit en suspension soutiré via la deuxième sortie de réacteur dans le troisième réacteur de polymérisation de la cascade de réacteurs via sa première ou sa deuxième entrée de réacteur,
i) éventuellement alimentation du troisième réacteur de polymérisation en quantités supplémentaires d'éthylène et/ou de diluant et éventuellement en quantités supplémentaires d'hydrogène et/ou de comonomères d'alpha-oléfine en C₃ à C₁₀ ;
j) mise en contact, dans le troisième réacteur de polymérisation, du produit en suspension alimenté dans le troisième réacteur de polymérisation et éventuellement des quantités supplémentaires d'éthylène et/ou de diluant et éventuellement d'hydrogène et/ou de comonomères d'alpha-oléfine en C₃ à C₁₀, ce qui permet de former ainsi une quantité supplémentaire de polyéthylène dans le produit en suspension ;
k) éventuellement, soutirage du produit en suspension du troisième réacteur de polymérisation via la première sortie de réacteur et, après avoir traversé le refroidisseur, alimentation du produit en suspension dans le troisième réacteur de polymérisation de la cascade de réacteurs via sa première entrée de réacteur ; et
l) soutirage du produit en suspension du troisième réacteur de polymérisation via la première sortie de réacteur et isolement du polyéthylène particulaire à partir du milieu de suspension et
éventuellement, vidage du troisième réacteur de polymérisation via sa deuxième sortie de réacteur et isolement du polyéthylène particulaire à partir du milieu de suspension.

2. Procédé selon la revendication 1 comprenant en outre, après l'étape 1),
m) soutirage du produit en suspension du troisième réacteur de polymérisation via la première sortie de réacteur et alimentation du produit en suspension dans le réacteur de polymérisation supplémentaire de la cascade de réacteurs via sa première entrée de réacteur et/ou
soutirage du produit en suspension du troisième réacteur de polymérisation via la deuxième sortie de réacteur et alimentation du produit en suspension soutiré via la deuxième sortie de réacteur dans le réacteur de polymérisation supplémentaire de la cascade de réacteurs via sa première ou sa deuxième entrée de réacteur,
n) éventuellement, alimentation du réacteur de polymérisation supplémentaire en quantités supplémentaires d'éthylène et/ou de diluant et éventuellement en quantités supplémentaires d'hydrogène et/ou de comonomères d'alpha-oléfine en C₃ à C₁₀ ;
o) mise en contact, dans le réacteur de polymérisation supplémentaire, du produit en suspension alimenté dans le réacteur de polymérisation supplémentaire et éventuellement des quantités supplémentaires d'éthylène et/ou de diluant et éventuellement d'hydrogène et/ou de comonomères d'alpha-oléfine en C₃ à C₁₀, formant ainsi une quantité supplémentaire de polyéthylène dans le produit en suspension ;
p) éventuellement, soutirage du produit en suspension du réacteur de polymérisation supplémentaire via la première sortie de réacteur et, après avoir traversé le refroidisseur, alimentation du produit en suspension dans le réacteur de polymérisation supplémentaire de la cascade de réacteurs via sa première entrée de réacteur ;
q) soutirage du produit en suspension du réacteur de polymérisation supplémentaire via la première sortie de réacteur et isolement du polyéthylène particulaire à partir du milieu de suspension et
éventuellement, vidage du réacteur de polymérisation supplémentaire via sa deuxième sortie de réacteur et isolement du polyéthylène particulaire à partir du milieu de suspension ;
r) éventuellement, répétition des étapes m) à q) pour tous les réacteurs de polymérisation supplémentaires de la cascade de réacteurs.

3. Procédé selon la revendication 1 ou 2, la première sortie de réacteur du premier réacteur de polymérisation et/ou la première sortie de réacteur du deuxième réacteur de polymérisation étant située(s) dans les deux tiers supérieurs de la paroi de réacteur.

4. Procédé selon l'une quelconque des revendications 1 à 3, les quantités d'éthylène, de catalyseur, de diluant et éventuellement d'hydrogène et éventuellement des comonomères d'alpha-oléfine en C₃ à C₁₀ étant alimentées dans le premier réacteur de polymérisation, dans le deuxième réacteur de polymérisation, dans le troisième réacteur de polymérisation facultatif et dans n'importe quel réacteur de polymérisation supplémentaire facultatif via le fond de réacteur du réacteur de polymérisation.

5. Procédé selon l'une quelconque des revendications 1 à 4, la cascade de réacteurs comprenant en outre une ou plusieurs cuves de vaporisation instantanée et ledit procédé comprenant en outre l'alimentation du produit en suspension soutiré du premier, du deuxième, du troisième ou du réacteur de polymérisation supplémentaire via la première sortie de réacteur, avant son alimentation dans le réacteur de polymérisation subséquent de la cascade de réacteurs via sa première ou sa deuxième entrée de réacteur, dans ladite cuve de vaporisation instantanée, la soumission dudit produit en suspension à une étape de vaporisation instantanée et l'alimentation du produit en suspension de vaporisation instantanée dans ledit réacteur de polymérisation subséquent de la cascade de réacteurs.

6. Procédé selon la revendication 5, la cascade de réacteurs comprenant en outre, en aval de chaque cuve de vaporisation instantanée, une pompe à cuve de vaporisation instantanée.

7. Procédé selon la revendication 6, le produit en suspension soutiré du premier, du deuxième, du troisième ou du réacteur de polymérisation supplémentaire via la deuxième sortie de réacteur étant alimenté dans la conduite d'évacuation de réacteur sur le côté aspiration de la pompe à cuve de vaporisation instantanée via une conduite de raccordement.

8. Procédé selon l'une quelconque des revendications 1 à 7, l'alimentation du catalyseur, de l'éthylène, de l'hydrogène et des comonomères d'alpha-oléfine en C₃ à C₁₀ dans un réacteur de polymérisation étant arrêtée avant le vidage dudit réacteur de polymérisation via la deuxième sortie de réacteur.

9. Procédé selon l'une quelconque des revendications 1 à 8, l'alimentation du catalyseur, de l'éthylène, de l'hydrogène et des comonomères d'alpha-oléfine en C₃ à C₁₀ dans le deuxième réacteur de polymérisation étant arrêtée lorsque le premier réacteur de polymérisation est vide ou l'alimentation du catalyseur, de l'éthylène, de l'hydrogène et des comonomères d'alpha-oléfine en C₃ à C₁₀ dans le troisième réacteur de polymérisation étant arrêtée lorsque le deuxième réacteur de polymérisation est vide ou l'alimentation du catalyseur, de l'éthylène, de l'hydrogène et des comonomères d'alpha-oléfine en C₃ à C₁₀ dans le réacteur de polymérisation supplémentaire étant arrêtée lorsque le troisième réacteur de polymérisation est vide.

10. Procédé selon l'une quelconque des revendications 1 à 9, où, pendant le vidage d'un réacteur de polymérisation via la deuxième sortie de réacteur, l'agitateur pour mélanger le contenu du volume de réacteur interne dudit réacteur de polymérisation fonctionne.

11. Procédé selon l'une quelconque des revendications 1 à 10, la cascade de réacteurs comprenant en outre une ou plusieurs vannes de commande d'évacuation de suspension disposées dans une ou plusieurs des conduites d'évacuation de réacteur et la vitesse de l'évacuation du produit en suspension à partir d'un réacteur de polymérisation étant commandée par réglage de la vanne de commande d'évacuation de suspension disposée en aval des première et deuxième sorties de réacteur dudit réacteur de polymérisation.

12. Procédé selon l'une quelconque des revendications 1 à 11, où, pendant le vidage d'un réacteur de polymérisation via la deuxième sortie de réacteur, la vitesse d'évacuation du produit en suspension est maintenue constante.

13. Procédé selon l'une quelconque des revendications 1 à 12, le produit en suspension du premier réacteur de polymérisation étant vidé dans le deuxième réacteur de polymérisation via la deuxième sortie de réacteur dudit premier réacteur de polymérisation et le produit en suspension du deuxième réacteur de polymérisation étant vidé via la deuxième sortie de réacteur dudit deuxième réacteur de polymérisation, éventuellement dans le troisième réacteur de polymérisation, et le produit en suspension du troisième réacteur de polymérisation étant vidé via la deuxième sortie de réacteur dudit troisième réacteur de polymérisation, éventuellement dans le réacteur de polymérisation supplémentaire.

14. Procédé selon l'une quelconque des revendications 1 à 13, comprenant en outre l'alimentation du produit en suspension soutiré du premier, du deuxième, du troisième ou du réacteur de polymérisation supplémentaire via la première sortie de réacteur, avant l'alimentation dans le réacteur de polymérisation subséquent de la cascade de réacteurs, via sa première ou sa deuxième entrée de réacteur, dans un séparateur, la séparation dans le séparateur du polyéthylène particulaire à partir du milieu de suspension, le recyclage d'au moins une partie du milieu de suspension séparé à partir du produit de suspension dans le séparateur sous forme de milieu de suspension recyclé et l'alimentation du polyéthylène particulaire séparé et/ou du milieu de suspension recyclé dans ledit réacteur de polymérisation subséquent de la cascade de réacteurs.

15. Utilisation du procédé selon l'une quelconque des revendications 1 à 14 pour vider au moins un réacteur de polymérisation.
